# EUROPEAN PATENT SPECIFICATION

(11) **EP 4 318 365 B1**
(45) Date of publication and mention of the grant of the patent: **17.09.2025**
(21) Application number: 23189745.5
(22) Date of filing: 04.08.2023
(51) Int. Cl.: G06Q 50/00

(54) **COMMUNICATION SYSTEM FOR MITIGATING UNDESIRABLE SOCIAL MEDIA CONTACTS**
KOMMUNIKATIONSSYSTEM ZUR MINDERUNG UNERWÜNSCHTER KONTAKTE IN SOZIALEN MEDIEN
SYSTÈME DE COMMUNICATION POUR ATTÉNUER DES CONTACTS INDÉSIRABLES SUR DES MÉDIAS SOCIAUX

(30) Priority: 04.08.2022 US 202217881472
(43) Date of publication of application: 07.02.2024
(73) Proprietor: Mitel Networks Corporation, Kanata, ON K2K 3K1 (CA)
(72) Inventor: Prodanovic, Radovan, Kanata, K2M 2V5 (CA); Naidoo, Logendra, Ottawa, K1S 0W8 (CA)
(74) Representative: McDougall, James

(56) References cited:
- US-A1- 2013 058 469
- US-A1- 2016 337 303
- US-A1- 2017 086 070
- US-A1- 2018 212 916

## Description

### FIELD OF THE INVENTION

The present disclosure generally relates to electronic communication methods and systems including those utilizing the Internet and cloud-based solutions. More particularly, examples of the disclosure relate to electronic communication methods and systems that can mitigate connecting with undesirable social media contacts by comparing a potential social media contact to a database of trusted contacts.

### BACKGROUND OF THE DISCLOSURE

Mobile and web applications allow users, such as operators of smartphones and other computing devices as well as tablets, laptop, notebook, and desktop computers, to perform a wide range of communication functions. Of course, one continuing use of smartphones and computing devices (together "user devices" and singly a "user device") is to access and participate in communications on one or more social media platforms with friends, family, co-workers, groups, organizations, and other entities. While not a new problem, an ongoing and challenging issue is how to detect and block (or reject) a connection to an unwanted (or undesirable) contact.

In recent years, undesirable potential contacts, such as scammers and others, attempt to have a user connect on a social media platform. The undesirable contact may send a connection request, such as a "friend" request, which can be an invitation for the user to connect to someone or some entity, or join a group, or open a message appearing to originate from a legitimate social media contact. Once connected, the undesirable contact may hack the social media account of the user to obtain personal information, or obtain and send messages to the user's existing contacts (sometimes under the guise of being the user), or render the user's account inaccessible or unusable, or post unwanted content on the user's site, or send unwanted communications to the user. Sometimes the undesirable contact is motivated by malicious intent to harm the user, the user's social media account, or the user's reputation.

Most social media platforms have few or no filters, warnings, or verification protocols and users can unwittingly connect to undesirable contacts. There is presently no solution to successfully address this deficiency in existing social media platforms, although reported egregious behavior may result in the undesirable contact's profile being temporarily or permanently shut down, but the damage to the user may have already been done, and an undeniable contact often can simply create a new profile.

Any discussion of problems provided in this section has been included in this disclosure solely for the purposes of providing a background for the present invention and should not be taken as an admission that any or all of the discussion was known at the time the invention was made.

US 2016/337303 A1 discloses a method for approving or disapproving a connection request between a first device and a second device, comprising sending, by the first device, a connection request to the second device, where the second device approves the connection request if an amount of interconnectivity between the first device and the second device reaches a threshold amount of interconnectivity.

US 2013/058469 A1 discloses a system and method for preventing or facilitating communications between individuals who reside in detention environments (such as e.g., prisons or correctional facilities) and individuals who are not in such detention environments using an automated authentication or verification.

US 2017/086070 A1 discloses a method for real-time communication authorization which includes a user device initiating a request to communicate with a target contact device and using an administrator device as an authorization device to pre-approve, or authorize, in real-time, the user device's ability to communicate with the target contact.

US 2018/212916 A1 discloses software for receiving user information, receiving a user request to connect with another user, computing a trust index for the requesting user, and allowing the connection request if the user's trust index is sufficiently high.

### SUMMARY

The invention is defined by the claims.

### BRIEF DESCRIPTION OF THE DRAWING FIGURES

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 illustrates an electronic, cloud-based communication system adapted to mitigate undesirable social media contacts using a trusted user database in accordance with exemplary embodiments of the disclosure.
FIG. 2 illustrates a functional block diagram of a communication system (e.g., a partial implementation of the system of FIG. 1) showing more detail of embodiments of undesirable social media mitigation components that may be provided at any suitable location on a server, a user device, or on the cloud.
FIG. 3 illustrates a method of mitigating spoofed social media contacts with functional blocks that may be performed using a communication system (e.g., the system of FIGS. 1 and 2).

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION OF EXEMPLARY EMBODIMENTS

The description of exemplary embodiments of the present invention provided below is merely exemplary and is intended for purposes of illustration only; the following description is not intended to limit the scope of the invention disclosed herein. Moreover, recitation of multiple embodiments having stated features is not intended to exclude other embodiments having additional features or other embodiments incorporating different combinations of the stated features.

As set forth in more detail below, exemplary embodiments of the disclosure relate to electronic communication systems, and corresponding methods performed by such systems, that can, for example, improve a user's ability to connect to trusted contacts. In brief, the system (and corresponding method(s) implemented by such a system) is adapted for mitigating (e.g., identifying, controlling, blocking, and the like) undesirable social media contacts through the use of a trusted contacts database.

As used herein, the terms application, module, analyzer, engine, and the like can refer to computer program instructions, encoded on computer storage medium for execution by, or to control the operation of, data processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices).

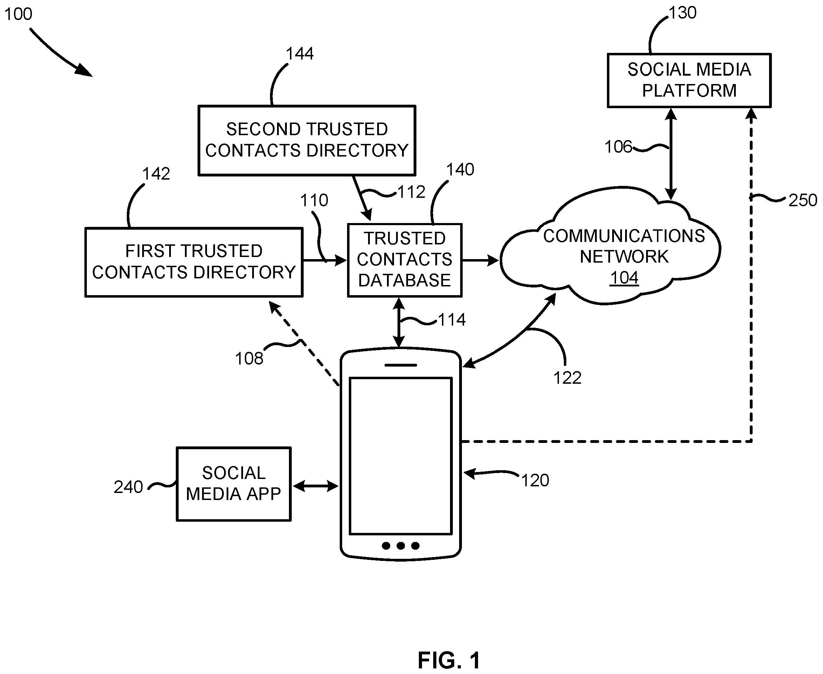

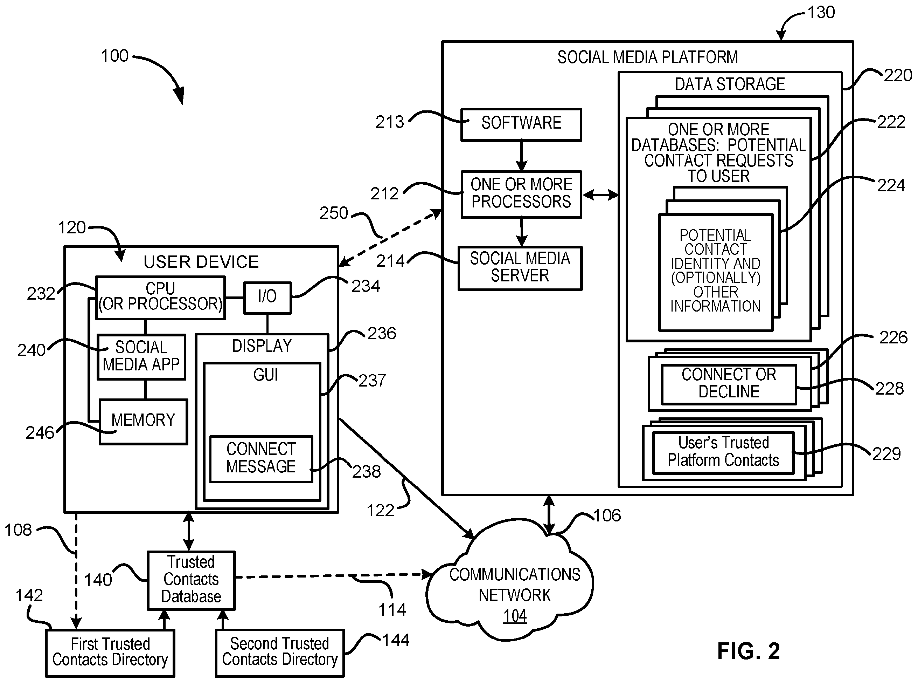

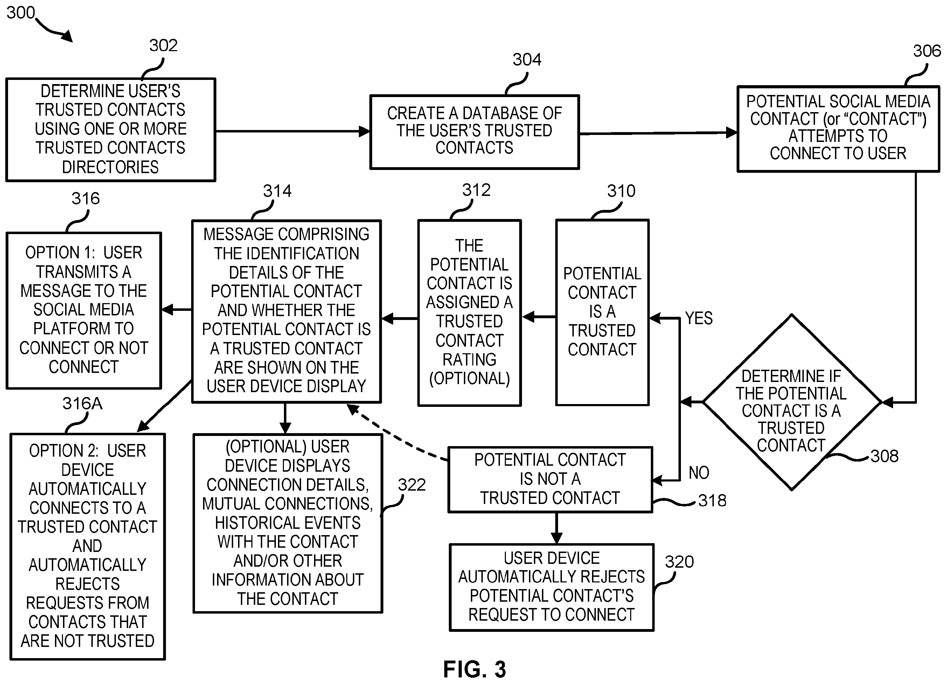

FIG. 1 illustrates an electronic, cloud-based communication system 100 in accordance with exemplary embodiments of the disclosure, although the system need not be cloud based. The systems and methods described herein can mitigate the chance of a user connecting to an undesirable social media contact (or "undesirable contact") by comparing the identity 224 (shown in FIG. 2) of a potential social media contact (or "potential contact") to contacts in a trusted contacts database 140. A system 100 (shown in FIGS. 1-2) and method 300 (shown in FIG. 3) according to this disclosure may be used in detecting undesirable social media contacts locally, such as by user device 120, or remotely in communications network 104 or social media platform 130.

The trusted contacts in the one or more trusted contacts directories and in trusted contacts database 140 are those of the user and could include one or more of (1) work contacts (such as fellow employees, customers, clients, vendors, and/or contractors) (2) former work contacts, (3) friends, (4) family members, (5) social media contacts that are already connections and trusted contacts from one or more social media sites other than social media platform 130, and/or (6) potentially, depending upon the user's preference or the parameters of system 100, contacts, members, or groups of any of (1)-(5), above.

A trusted contact may be an individual, social or special interest group (such as groups pertaining to sports, nature, school alumni, music, or politics) business, or other entity or organization. Thus, the trusted contacts directories could be Outlook contacts, social media contacts, or other electronically available contacts lists.

In FIG. 1, the system 100 is shown at a high level and includes a communications network 104 (with network 104 being representative of a wireless, or wired system to provide communication links between a social media platform 130 and a user device 120 (e.g., a cellphone, smartphone, computing device configured for connecting to social media platform 130, and so on) communicatively linked to the communications network 104 and/or directly to social media platform 130, a social media platform 130 (note: the social media platform 130 could include or replace the communications network 104, in which case, communications network 104 need not be used or would not be a separate structure).

In FIG. 1, communications network 104 can include or be, for example, an internet protocol (IP) network. Exemplary types of networks suitable for communication with communications network (or "network") 104 can be or include a local area network, a wide-area network, a metropolitan area network, wireless networks, a private branch exchange (PBX), or a portion of the Internet. Various components of network 104 can be coupled to one or more other components using an Ethernet connection, other wired connections, and/or wireless interfaces. Network 104 can be coupled to other networks and/or to other devices typically coupled to networks. By way of example, network 104 can be coupled to additional networks that can be coupled to one or more devices, such as user device 120, which may communicate with social media platform 130 during operation of the system 100.

Social media platform 130 may be indirectly accessible by user device 120 over the communications network 104 via connections 122 and 106, or directly accessible via link 250. The social media platform 130 may be Twitter^{™}, Instagram^{™}, LinkedIn^{™}, Facebook^{™}, or the like, as the present invention is useful with essentially any social media server, such as server 214.

User device 120 can be or can include any suitable device with wired or wireless communication features that can connect to communications network 104 and/or directly to social media platform 130. For example, user device 120 can be either a wearable device, a tablet, a computer, a wired phone, a mobile (or cellular) phone, a personal (e.g., laptop or desktop) computer, a streaming device, such as a game console, or other media streaming device.

As shown in FIG. 2, user device 120 includes a central processing unit ("CPU" or "processor") 232 that manages the operations of input and output (I/O) device(s) 234 so as to communicate with various components of system 100, such as the social media platform 130 via social media server 214 and trusted contacts database 140. The user device 120 further includes a social media application 240 that is configured to communicate directly or indirectly with social media platform 130 (preferably via communications with network 104 and social media server 214), a memory 246 that may be utilized to store information such as trusted contacts, and/or undesirable contacts that previously attempted to contact user device 120, a display 236, and a graphical user interface ("GUI") 237, which may utilize one or more of a touch screen, a keyboard, other manual data input structures, audio input devices, or any other device for the user to interface with the user device 120. As shown, the GUI 237 may be integrated with the display 236 for touch screen graphical user interface.

User device 120 may be used to store, create, or assist in creating one or more trusted contacts directories via connection 108 (such as first trusted contact directory 142 and/or second trusted contact directory 144, although there may be any number of trusted contact directories) that collectively form or are stored in a trusted contacts database 140. In this regard, a user may utilize user device 120 to store into memory 246, either by typing or automatically, such as by using a link or command, contact information for a trusted contact.

User device 120 is in communication with a trusted contacts database 140, which may be located in user device 120 or be remote to user device 120. Trusted contacts database 140 includes contacts of the user from one or more trusted contact directories, and a first trusted contacts directory 142 and a second trusted contacts directory 144 are shown in this exemplary embodiment. Alternatively, trusted contacts database 140 may be comprised of one or more trusted contacts directories. Trusted contacts database 140 may be remote to user device 120 and communicate directly with communications network 104 via link 114, wherein communications network 104 communicates with user device 120 via link 122.

Processor 232 may, in some embodiments, have a default stored in memory 246 to accept or rejection connection requests, or the default can be set by the user of user device 120. For example, the memory 246 may be configurable to instruct processor 232 to automatically accept connection requests 222 from potential contacts that are in the trusted contacts database 140 and/or to automatically reject connection requests 222 from potential contacts that are not in the trusted contacts database 140.

When a potential social media contact (or "potential contact") attempts to connect 222 on social media platform 130 with the user, social media server 214 communicates via link 106 through communications network 104 (or directly to I/O 234 and processor 232 via link 250) of the connection attempt. Processor 232 compares the potential contact identity 224 to the trusted contacts database 140 to determine if the potential contact is or is not a trusted contact.

Processor 232 than causes display 236 to display a connect message 238, wherein the connect message 238 alerts the user that the potential contact has sent a connection request 222 to connect to the user, the identification 224 of the potential contact, and whether the potential contact is in the trusted contacts database 140. The message 238 may take the form of an alert, an icon, and/or a message identifying the potential contact and whether the potential contact is a trusted contact, allowing the operator of the user device 120 to allow or prevent/block the requested connection from potential contact C.

The processor 232 further operates to execute code/instructions and/or run software loaded onto device 120 (e.g., onto memory 246, onto processor 232, or into social media app 240) to provide the functionality of social media app 240. Memory 246 may also be used to store data (at least temporarily) for display 236 and/or for the first trusted contacts directory 142, or it may store trusted contact information and part of trusted contacts database 140.

Processor 232 can then cause display 236 to show a connecting message 238 that includes at least the identity of the potential contact and whether the potential contact is a trusted contact. The user can then utilize GUI 237 to accept or decline the connection 228. The social media application 240 also can also be programed automatically or by the user to simply reject a connection if the potential contact is not in the trusted contacts database 140 and/or accept a connection if the potential contact is in the trusted contacts database 140. In some cases, the potential contact may be indicated on display 236 as being a trusted contact or not being a trusted contact by using a notification (e.g., <Incoming_Contact_Name> is a " 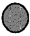 Trusted Contact" (with the circle being shown green or otherwise indicating the potential contact is a trusted contact). A red circle would indicate that the potential contact is not a trusted contact.

Alternatively, the user could set user device 120 to be selective in automatically accepting and/or rejecting potential contacts. For example, using GUI 237 the user may instruct processor 232 and social media App 240 to block or accept defined potential contacts, for example, "Block all contacts except those that are members of my 'I Love Nature' site," or "Block all contacts with connections to the 'How to Build a Bomb' site), and/or "Connect to all members of my 'Classic rock music' site," or "Connect to all members of my 'College alumni' site."

Display 236 may also show additional information stored in trusted database 140 about the potential contact if it is a trusted contact. The information may include one or more of the following regarding the potential contact: (1) the nature of other contacts between the user and the potential contact, (2) information described above that may be in the trusted contacts database 140, (3) address, (4) phone number, (5) employer, (6) work title, and (7) email address. Display 236 may automatically show the additional information or the user may instruct processor 232 to show the additional information on display 236.

The social media platform 130, which may be provided via one or more servers and data storage devices, includes one or more processors 212 running software or executing code/instructions 213 to provide functions of both a social media platform server 214 (e.g., to provide social media services by interacting with social media application 240 in client device 120). The one or more processors 212 manage access to data storage 220. The data storage 220 is used to store in one or more databases 222, which includes the potential contact requests 222 to connect to the user, which further includes at least the identification 224 of the potential contact. Other optional information in identification 224 could include (1) mutual connections on social media platform 130 between the user and the potential contact, (2) any past attempts to connect to the user, and (3) any prior disconnections (e.g., unfriending) between the user and the potential contact and which party initiated the disconnection.

FIG. 3 illustrates a method 300 that can be performed by a system, such as system 100, according to this disclosure. Method 300 begins with the step 302 of determining a user's trusted contacts by utilizing one or more trusted contacts directories, such as first trusted contact directory 142 and second trusted contact directory 144, or any other suitable directories of trusted contacts. A trusted contacts database 140 is created (step 304) and it can be a separate database in communication with the one or more trusted contacts directories and that includes all of the trusted contacts in the one or more trusted contacts directories. Or the trusted contacts database 140 may not be separate and instead be comprised of the one or more trusted contacts directories.

In step 306 a potential contact on social media platform 130 attempts to connect 222 to the user, such as by sending a friend request, or sends a request for the user to join a group, or to otherwise connect. After the request to connect (222/step 306), which includes the identify 224 of the potential connection, it is transmitted to and received by the social media application 240 of user device 120.

At step 308 processor 232 queries trusted contacts database 140 to determine whether the potential contact is a trusted contact. Processor 232 then causes display 236 to display a connecting message that includes at least the identity of the potential contact and whether the potential contact is a trusted contact (step 310) or is not a trusted contact (step 318).

If the potential contact is a trusted contact (step 310) user device 120 may optionally assign a trust rating (step 312) to the potential contact. The trust rating may be on a scale, for example, A-C, with A being the highest level of trust and C being the lowest, or from 1-5 with 1 being the highest level and 5 being the lowest. The trust rating could be based on one or more of any of the factors described above with respect to how members in the trusted contacts database are determined. And the user may enter trust ratings into user device 120 for various types of trusted contacts based on personal preferences and/or past experience.

At step 314, processor 232 causes display 216 to show at least the identification of the potential contact and whether the potential contact is a trusted contact. At step 314 the processor may also cause display 216 to display, or provide a link, to one or more of the following to the extent available: (1) the potential contact's trust rating (if any) as assigned by processor 232, (2) optional information in identification 224 as described above, and (3) the nature of other contacts between the user and the potential contact, (4) information described above that may be in the trusted contacts database 140, (5) address, (6) phone number, (7) employer, (8) work title, and (9) email address.

At step 316 the user transmits a message via social media app 240 to social media platform 130 to either connect or not to connect to the potential contact. Alternatively, in step 316A, user device 120 automatically sends a message to connect to the potential contact if the potential contact is in trusted database 140 (and otherwise meets criteria entered into user device 120 by the user), and automatically sends a message to not connect to the potential contact if the potential contact is not in the trusted database 140 (and does not fall into an exception entered into user device 120 by the user).

Turning to step 318, if the potential social media contact is not a trusted contact in trusted contacts database 140, user device 120 may automatically signal social media platform 130 to reject the potential contact's request to connect at step 320. Alternatively, the potential contact who is not a trusted contact may still be shown on display 236 of user device 120 at step 314 so the user can make a final determination at step 316 of whether to connect to the potential contact.

It will be appreciated from the above description that the communication systems taught herein may be used to provide auto-verification of potential contacts in real time using a cost effective and pre-established trusted contacts database 140. Such levels of "trust" can be configured or defined for the user. Note, the "trust" may be applied on a person-by-person level and/or may be applied to groups of possible potential contacts including businesses or organizations.

## Claims

1. An electronic communication system (100) adapted to create and utilize a trusted contacts database (140) in order to mitigate undesirable social media contacts, the electronic communication system comprising:
a user device (120) communicatively linked to a communications network (104), wherein the user device is configured to enter trusted contacts of a user of the user device into a trusted contacts directory (142, 144), which is part of the trusted contacts database, wherein the trusted contacts directory includes one or more of the user's (a) work contacts, (b) former work contacts, (c) friends, (d) family members, (e) social media contacts, and (f) contacts of any of categories (a)-(e);
a processor (232) operable on the user device;
a social media application (240) configured to interact with (a) the communications network, and (b) with a social media platform (130), wherein the social media platform comprises a database (222) storing identification information (224) for each potential contact, wherein the identification information (224) includes (i) mutual connections on social media platform (130) between the user and the potential contact, (ii) any past attempts to connect to the user, and (iii) any prior disconnections between the user and the potential contact and which party initiated the disconnection; and
the processor (232), in response to a connection request sent to the user device from the social media platform (130) via the communications network from a potential contact on the social media network to the user of the user device, being configured to display a connect message (238) alerting the user that the potential contact has sent the request to connect and query the trusted contacts database to determine if the potential contact is in the trusted contacts database, wherein the query is directed through the user device.

2. The electronic communication system (100) of claim 1, wherein the trusted contacts directory (142, 144) is configured to be updated by the user device.

3. The electronic communication system (100) of claim 1 or claim 2, wherein the trusted contacts database (140) comprises a plurality of trusted contacts directories (142, 144).

4. The electronic communication system (100) of any preceding claim, wherein the user device (120) comprises a display (236) configured to show on the user device a message including the name of the potential contact and indicia of whether the potential contact is in the trusted contacts database.

5. The electronic communication system (100) of claim 4, wherein the display (236) is further configured to show a trust rating of the potential contact, wherein the trust rating is assigned by the processor or by the user.

6. The electronic communication system (100) of claim 4 or claim 5, wherein if the potential contact is in the trusted contacts database, the processor (232) is configured to retrieve from the trusted contacts database (140) and show on the display (236) of the user device one or more of (a) details regarding a connection between the user and the potential contact, (b) mutual connections of the user and the potential contact, (c) historical events associated with prior communications between the user and the potential contact, (d) one or more phone numbers of the potential contact, (e) one or more email addresses of the potential contact, (f) a name of the potential contact's organization, (g) a business title of the potential contact, (h) a physical address of the potential contact, and (i) a physical address of the potential contact's organization.

7. The electronic communication system (100) of any preceding claim, wherein if the potential contact is not in the trusted contacts database (140) the user device (120) or the communications network (104) is configured to instruct the social media platform to remove the connection request.

8. The electronic communication system (100) of any preceding claim, wherein if the potential contact is in the trusted contacts database (140), the user device (120) is configured to request input from the user of the user device to accept or reject the connection request, and to communicate via the user device the input to the social media platform.

9. The electronic communication system (100) of any preceding claim, wherein the communications network (104) communicates with the processor (232) to cause the display (236) to generate a connect message on the user device related to a proposed connection between the user and the potential contact.

10. A method of mitigating undesirable contacts on a social media platform (130), the method comprising:
entering, utilizing a user device (120), one or more trusted contacts of a user of the user device into a trusted contacts directory (142, 144), wherein the trusted contacts directory includes one or more of the user's (a) work contacts, (b) former work contacts, (c) friends, (d) family members, (e) social media contacts, and (f) contacts of any of categories (a)-(e);
storing the trusted contacts directory in a trusted contacts database (140) in communication with one or both of the user device and a communications network (104);
sending, by a social media server (214) operating on a social media platform (130), to the user device (120) a request to connect to the user by a potential contact on the social media platform;
a processor (232) of the user device or the communications network comparing the identity of the potential contact to the trusted contacts database and determining whether the potential contact is in the trusted contacts database;
the processor (232) of the user device causing a display (236) to display a connect message (238) alerting the user that the potential contact has sent the request to connect, the connect message including an identification information (224) of the potential contact, wherein the identification information (224) includes (i) mutual connections on social media platform (130) between the user and the potential contact, (ii) any past attempts to connect to the user, and (iii) any prior disconnections between the user and the potential contact and which party initiated the disconnection.

11. The method of mitigating undesirable contacts of claim 10 that further comprises the step of sending a message, by the user device (120), to the social media platform (130) to delete the connection request if the potential contact is not in the trusted contacts database.

12. The method of mitigating undesirable contacts of claim 10 or claim 11, wherein the trusted contacts directory (142, 144) is updated by one or both of the user device (120) and the communications network (104).

13. The method of mitigating undesirable contacts of any of claims 10 to 12, further comprising, with an interface application on the user device, receiving input from the communications network to allow requested connections from only a subset of the trusted contacts database.

## Patentansprüche

1. Elektronisches Kommunikationssystem (100), das dazu angepasst ist, eine Datenbank vertrauenswürdiger Kontakte (140) anzulegen und zu nutzen, um unerwünschte Kontakte in sozialen Medien zu mindern, wobei das elektronische Kommunikationssystem Folgendes umfasst:
eine Benutzervorrichtung (120), die kommunikativ mit einem Kommunikationsnetzwerk (104) verbunden ist, wobei die Benutzervorrichtung dazu konfiguriert ist, vertrauenswürdige Kontakte eines Benutzers der Benutzervorrichtung in ein Verzeichnis vertrauenswürdiger Kontakte (142, 144) einzugeben, das Teil der Datenbank vertrauenswürdiger Kontakte ist, wobei das Verzeichnis vertrauenswürdiger Kontakte einen oder mehrere der (a) Arbeitskontakte des Benutzers, (b) ehemaligen Arbeitskontakte des Benutzers, (c) Freunde des Benutzers, (d) Familienmitglieder des Benutzers, (e) Kontakte des Benutzers in sozialen Medien und (f) Kontakte des Benutzers einer beliebigen der Kategorien (a)-(e) beinhaltet;
einen Prozessor (232), der auf der Benutzervorrichtung betrieben werden kann;
eine Anwendung (240) der sozialen Medien, die dazu konfiguriert ist, mit (a) dem Kommunikationsnetzwerk und (b) einer Plattform (130) der sozialen Medien zu interagieren, wobei die Plattform der sozialen Medien eine Datenbank (222) umfasst, die Identifikationsinformationen (224) für jeden potenziellen Kontakt speichert, wobei die Identifikationsinformationen (224) (i) gegenseitige Verbindungen auf einer Plattform (130) der sozialen Medien zwischen dem Benutzer und dem potenziellen Kontakt, (ii) jegliche früheren Versuche, sich mit dem Benutzer zu verbinden, und (iii) jegliche vorherigen Trennungen zwischen dem Benutzer und dem potenziellen Kontakt und welche Partei die Trennung initiiert hat beinhalten; und
wobei der Prozessor (232), als Reaktion auf eine Verbindungsanfrage, die von der Plattform (130) der sozialen Medien an die Benutzervorrichtung über das Kommunikationsnetzwerk von einem potenziellen Kontakt im Netzwerk der sozialen Medien an den Benutzer der Benutzervorrichtung gesendet wird, dazu konfiguriert ist, eine Verbindungsnachricht (238) anzuzeigen, die den Benutzer darauf hinweist, dass der potenzielle Kontakt die Anfrage zur Verbindung gesendet hat, und die Datenbank vertrauenswürdiger Kontakte abzufragen, um zu bestimmen, ob sich der potenzielle Kontakt in der Datenbank vertrauenswürdiger Kontakte befindet, wobei die Abfrage durch die Benutzervorrichtung geleitet wird.

2. Elektronisches Kommunikationssystem (100) nach Anspruch 1, wobei das Verzeichnis vertrauenswürdiger Kontakte (142, 144) dazu konfiguriert ist, von der Benutzervorrichtung aktualisiert zu werden.

3. Elektronisches Kommunikationssystem (100) nach Anspruch 1 oder Anspruch 2, wobei die Datenbank vertrauenswürdiger Kontakte (140) eine Vielzahl von Verzeichnissen vertrauenswürdiger Kontakte (142, 144) umfasst.

4. Elektronisches Kommunikationssystem (100) nach einem vorhergehenden Anspruch, wobei die Benutzervorrichtung (120) eine Anzeige (236) umfasst, die dazu konfiguriert ist, auf der Benutzervorrichtung eine Nachricht anzuzeigen, die den Namen des potenziellen Kontakts und Angaben darüber, ob sich der potenzielle Kontakt in der Datenbank vertrauenswürdiger Kontakte befindet, beinhaltet.

5. Elektronisches Kommunikationssystem (100) nach Anspruch 4, wobei die Anzeige (236) ferner dazu konfiguriert ist, eine Vertrauensbewertung des potenziellen Kontakts anzuzeigen, wobei die Vertrauensbewertung von dem Prozessor oder von dem Benutzer zugewiesen wird.

6. Elektronisches Kommunikationssystem (100) nach Anspruch 4 oder Anspruch 5, wobei, wenn sich der potenzielle Kontakt in der Datenbank vertrauenswürdiger Kontakte befindet, der Prozessor (232) dazu konfiguriert ist, eines oder mehrere von (a) Details bezüglich einer Verbindung zwischen dem Benutzer und dem potenziellen Kontakt, (b) gegenseitigen Verbindungen des Benutzers und des potenziellen Kontakts, (c) historischen Ereignissen, die früheren Kommunikationen zwischen dem Benutzer und dem potenziellen Kontakt zugeordnet sind, (d) einer oder mehreren Telefonnummern des potenziellen Kontakts, (e) einer oder mehreren E-Mail-Adressen des potenziellen Kontakts, (f) einem Namen der Organisation des potenziellen Kontakts, (g) einem Geschäftstitel des potenziellen Kontakts, (h) einer physischen Adresse des potenziellen Kontakts und (i) einer physischen Adresse der Organisation des potenziellen Kontakts von der Datenbank vertrauenswürdiger Kontakte (140) abzurufen und diese auf der Anzeige (236) der Benutzervorrichtung anzuzeigen.

7. Elektronisches Kommunikationssystem (100) nach einem vorhergehenden Anspruch, wobei, wenn sich der potenzielle Kontakt nicht in der Datenbank vertrauenswürdiger Kontakte (140) befindet, die Benutzervorrichtung (120) oder das Kommunikationsnetzwerk (104) dazu konfiguriert ist, die Plattform der sozialen Medien anzuweisen, die Verbindungsanfrage zu entfernen.

8. Elektronisches Kommunikationssystem (100) nach einem vorhergehenden Anspruch, wobei, wenn sich der potenzielle Kontakt in der Datenbank vertrauenswürdiger Kontakte (140) befindet, die Benutzervorrichtung (120) dazu konfiguriert ist, eine Eingabe von dem Benutzer der Benutzervorrichtung anzufordern, um die Verbindungsanfrage anzunehmen oder abzulehnen, und über die Benutzervorrichtung die Eingabe an die Plattform der sozialen Medien zu kommunizieren.

9. Elektronisches Kommunikationssystem (100) nach einem vorhergehenden Anspruch, wobei das Kommunikationsnetzwerk (104) mit dem Prozessor (232) kommuniziert, um zu bewirken, dass die Anzeige (236) eine Verbindungsnachricht auf der Benutzervorrichtung erzeugt, die sich auf eine vorgeschlagene Verbindung zwischen dem Benutzer und dem potenziellen Kontakt bezieht.

10. Verfahren zur Minderung unerwünschter Kontakte auf einer Plattform (130) der sozialen Medien, wobei das Verfahren Folgendes umfasst:
Eingeben, unter Nutzung einer Benutzervorrichtung (120), eines oder mehrerer vertrauenswürdiger Kontakte eines Benutzers der Benutzervorrichtung in ein Verzeichnis vertrauenswürdiger Kontakte (142, 144), wobei das Verzeichnis vertrauenswürdiger Kontakte einen oder mehrere der (a) Arbeitskontakte des Benutzers, (b) ehemaligen Arbeitskontakte des Benutzers, (c) Freunde des Benutzers, (d) Familienmitglieder des Benutzers, (e) Kontakte des Benutzers in sozialen Medien und (f) Kontakte des Benutzers einer beliebigen der Kategorien (a)-(e) beinhaltet;
Speichern des Verzeichnisses vertrauenswürdiger Kontakte in einer Datenbank vertrauenswürdiger Kontakte (140) in Kommunikation mit einer oder beiden der Benutzervorrichtung und einem Kommunikationsnetzwerk (104);
Senden, durch einen Server (214) der sozialen Medien, der auf einer Plattform (130) der sozialen Medien betrieben wird, einer Anfrage zur Verbindung mit dem Benutzer durch einen potenziellen Kontakt auf der Plattform der sozialen Medien an die Benutzervorrichtung (120);
einen Prozessor (232) der Benutzervorrichtung oder des Kommunikationsnetzwerks, der die Identität des potenziellen Kontakts mit der Datenbank vertrauenswürdiger Kontakte vergleicht und bestimmt, ob sich der potenzielle Kontakt in der Datenbank vertrauenswürdiger Kontakte befindet;
wobei der Prozessor (232) der Benutzervorrichtung bewirkt, dass eine Anzeige (236) eine Verbindungsnachricht (238) anzeigt, die den Benutzer darauf hinweist, dass der potenzielle Kontakt die Anfrage zur Verbindung gesendet hat, wobei die Verbindungsnachricht eine Identifikationsinformation (224) des potenziellen Kontakts beinhaltet, wobei die Identifikationsinformation (224) (i) gegenseitige Verbindungen auf einer Plattform (130) der sozialen Medien zwischen dem Benutzer und dem potenziellen Kontakt, (ii) jegliche früheren Versuche, sich mit dem Benutzer zu verbinden, und (iii) jegliche vorherigen Trennungen zwischen dem Benutzer und dem potenziellen Kontakt und welche Partei die Trennung initiiert hat beinhaltet.

11. Verfahren zur Minderung unerwünschter Kontakte nach Anspruch 10, das ferner den Schritt des Sendens einer Nachricht durch die Benutzervorrichtung (120) an die Plattform (130) der sozialen Medien umfasst, um die Verbindungsanfrage zu löschen, wenn sich der potenzielle Kontakt nicht in der Datenbank vertrauenswürdiger Kontakte befindet.

12. Verfahren zur Minderung unerwünschter Kontakte nach Anspruch 10 oder Anspruch 11, wobei das Verzeichnis vertrauenswürdiger Kontakte (142, 144) von einer oder beiden der Benutzervorrichtung (120) und des Kommunikationsnetzwerks (104) aktualisiert wird.

13. Verfahren zur Minderung unerwünschter Kontakte nach einem der Ansprüche 10 bis 12, ferner umfassend, mit einer Schnittstellenanwendung auf der Benutzervorrichtung, Empfangen einer Eingabe von dem Kommunikationsnetzwerk, um angefragte Verbindungen nur von einer Teilmenge der Datenbank vertrauenswürdiger Kontakte zu ermöglichen.

## Revendications

1. Système de communication électronique (100) adapté à la création et à l'utilisation d'une base de données de contacts de confiance (140) afin d'atténuer les contacts indésirables sur les réseaux sociaux, le système de communication électronique comprenant :
un dispositif utilisateur (120) relié de manière communicative à un réseau de communication (104), ledit dispositif utilisateur étant configuré pour entrer des contacts de confiance d'un utilisateur du dispositif utilisateur dans un répertoire de contacts de confiance (142, 144), qui fait partie de la base de données de contacts de confiance, ledit répertoire de contacts de confiance comprenant un ou plusieurs parmi les (a) contacts professionnels, (b) anciens contacts professionnels, (c) amis, (d) membres de la famille, (e) contacts de médias sociaux de l'utilisateur, et (f) les contacts selon l'une quelconque des catégories (a) à (e) ;
un processeur (232) utilisable sur le dispositif utilisateur ;
une application de médias sociaux (240) configurée pour interagir avec (a) le réseau de communication, et (b) avec une plateforme de médias sociaux (130), ladite plateforme de médias sociaux comprenant une base de données (222) stockant des informations d'identification (224) pour chaque contact potentiel, lesdites informations d'identification (224) comprenant (i) des connexions mutuelles sur la plateforme de médias sociaux (130) entre l'utilisateur et le contact potentiel, (ii) toute tentative passée de connexion à l'utilisateur, et (iii) toute déconnexion antérieure entre l'utilisateur et le contact potentiel et quelle partie a initié la déconnexion ; et
le processeur (232), en réponse à une demande de connexion envoyée au dispositif utilisateur depuis la plateforme de médias sociaux (130) via le réseau de communications d'un contact potentiel sur le réseau de médias sociaux à l'utilisateur de l'appareil utilisateur, étant configurée pour afficher un message de connexion (238) avertissant l'utilisateur que le contact potentiel a envoyé la demande de connexion et d'interrogation de la base de données de contacts de confiance pour déterminer si le contact potentiel se trouve dans la base de données de contacts de confiance,
ladite demande étant dirigée à travers le dispositif utilisateur.

2. Système de communication électronique (100) selon la revendication 1, ledit répertoire de contacts de confiance (142, 144) étant configuré pour être mis à jour par le dispositif utilisateur.

3. Système de communication électronique (100) selon la revendication 1 ou la revendication 2, ladite base de données de contacts de confiance (140) comprenant une pluralité de répertoires de contacts de confiance (142, 144).

4. Système de communication électronique (100) selon l'une quelconque des revendications précédentes, ledit dispositif utilisateur (120) comprenant un dispositif d'affichage (236) configuré pour afficher sur ledit dispositif utilisateur un message comprenant le nom du contact potentiel et des indices indiquant si le contact potentiel se trouve dans la base de données de contacts de confiance.

5. Système de communication électronique (100) selon la revendication 4, ledit dispositif d'affichage (236) étant en outre configuré pour afficher une note de confiance du contact potentiel, ladite note de confiance étant attribuée par le processeur ou par l'utilisateur.

6. Système de communication électronique (100) selon la revendication 4 ou la revendication 5, si le contact potentiel se trouve dans la base de données de contacts de confiance, ledit processeur (232) étant configuré pour extraire de la base de données de contacts de confiance (140) et afficher sur le dispositif d'affichage (236) du dispositif utilisateur une ou plusieurs parmi (a) des détails concernant une connexion entre l'utilisateur et le contact potentiel, (b) des connexions mutuelles de l'utilisateur et du contact potentiel, (c) des événements historiques associés à des communications antérieures entre l'utilisateur et le contact potentiel, (d) un ou plusieurs numéros de téléphone du contact potentiel, (e) une ou plusieurs adresses e-mail du contact potentiel, (f) un nom de l'organisation du contact potentiel, (g) un titre commercial du contact potentiel, (h) une adresse physique du contact potentiel, et (i) une adresse physique de l'organisation du contact potentiel.

7. Système de communication électronique (100) selon l'une quelconque des revendications précédentes, si le contact potentiel ne se trouve pas dans la base de données de contacts de confiance (140), ledit dispositif utilisateur (120) ou ledit réseau de communication (104) étant configuré pour ordonner à la plateforme de médias sociaux de supprimer la demande de connexion.

8. Système de communication électronique (100) selon l'une quelconque des revendications précédentes, si le contact potentiel se trouve dans la base de données de contacts de confiance (140), ledit dispositif utilisateur (120) étant configuré pour demander une entrée de la part de l'utilisateur du dispositif utilisateur pour accepter ou rejeter la demande de connexion, et pour communiquer via le dispositif utilisateur l'entrée à la plateforme de médias sociaux.

9. Système de communication électronique (100) selon l'une quelconque des revendications précédentes, ledit réseau de communication (104) communiquant avec ledit processeur (232) pour amener ledit dispositif d'affichage (236) à générer un message de connexion sur le dispositif utilisateur concernant une connexion proposée entre l'utilisateur et le contact potentiel.

10. Procédé d'atténuation de contacts indésirables sur une plateforme de médias sociaux (130), le procédé comprenant :
l'entrée, à l'aide d'un dispositif utilisateur (120), d'un ou plusieurs contacts de confiance d'un utilisateur du dispositif utilisateur dans un répertoire de contacts de confiance (142, 144), ledit répertoire de contacts de confiance comprenant un ou plusieurs parmi les (a) contacts professionnels, (b) anciens contacts professionnels, (c) amis, (d) membres de la famille, (e) contacts de médias sociaux de l'utilisateur, et (f) contacts selon l'une quelconque des catégories (a) à (e) ;
le stockage du répertoire de contacts de confiance dans une base de données de contacts de confiance (140) en communication avec l'un ou les deux parmi le dispositif utilisateur et un réseau de communication (104) ;
l'envoi, par un serveur de médias sociaux (214) fonctionnant sur une plateforme de médias sociaux (130), au dispositif utilisateur (120) d'une demande de connexion à l'utilisateur par un contact potentiel sur la plateforme de médias sociaux ;
un processeur (232) du dispositif utilisateur ou du réseau de communication comparant l'identité du contact potentiel à la base de données de contacts de confiance et déterminant si le contact potentiel se trouve dans la base de données de contacts de confiance ;
le processeur (232) du dispositif utilisateur amenant un dispositif d'affichage (236) à afficher un message de connexion (238) avertissant l'utilisateur que le contact potentiel a envoyé la demande de connexion, le message de connexion comprenant une information d'identification (224) du contact potentiel, ladite information d'identification (224) comprenant (i) des connexions mutuelles sur la plateforme de médias sociaux (130) entre l'utilisateur et le contact potentiel, (ii) toute tentative passée de connexion à l'utilisateur, et (iii) toute déconnexion antérieure entre l'utilisateur et le contact potentiel et quelle partie a initié la déconnexion.

11. Procédé d'atténuation de contacts indésirables selon la revendication 10, comprenant en outre l'étape d'envoi d'un message, par le dispositif utilisateur (120), à la plateforme de médias sociaux (130) pour supprimer la demande de connexion si le contact potentiel ne se trouve pas dans la base de données de contacts de confiance.

12. Procédé d'atténuation de contacts indésirables selon la revendication 10 ou la revendication 11, ledit répertoire de contacts de confiance (142, 144) étant mis à jour par l'un ou les deux parmi le dispositif utilisateur (120) et le réseau de communication (104).

13. Procédé d'atténuation de contacts indésirables selon l'une quelconque des revendications 10 à 12, comprenant en outre, avec une application d'interface sur le dispositif utilisateur, la réception d'une entrée en provenance du réseau de communication pour permettre des connexions demandées en provenance uniquement d'un sous-ensemble de la base de données de contacts de confiance.
